# EUROPEAN PATENT SPECIFICATION

(11) **EP 1 558 379 B1**
(45) Date of publication and mention of the grant of the patent: **04.07.2018**
(21) Application number: 03756586.8
(22) Date of filing: 17.10.2003
(51) Int. Cl.: B01J 23/10, B01J 21/06, B01J 37/02, B01J 20/06, B01J 35/04, B01D 53/00

(54) **IMPROVED OXYGEN STORAGE COMPONENT**
VERBESSERTE SAUERSTOFFSPEICHERKOMPONENTE
COMPOSE DE STOCKAGE D'OXYGENE AMELIORE

(30) Priority: 17.10.2002 GB 0224180
(43) Date of publication of application: 03.08.2005
(73) Proprietor: Magnesium Elektron Limited, Manchester M27 8LN (GB)
(72) Inventor: DI MONTE, Roberta, 34127 Trieste (IT); KASPAR, Jan,, 34127 Trieste (IT); BRADSHAW, Heather, Lancashire BL3 4TX (GB); NORMAN, Colin, Cheshire M33 3SH (GB)
(74) Representative: Murgitroyd & Company
(86) International application number: PCT/GB2003/004495
(87) International publication number: WO 2004/035202

(56) References cited:
- EP-A- 0 310 398
- WO-A-02/072256
- FR-A- 2 774 927

## Description

The present invention relates to oxygen storage components for catalytic converters for automobile exhaust system particularly for those with petrol-driven engines.

In exhaust systems catalysts are required to remove by chemical reaction the main pollutants of carbon monoxide (CO), unburnt hydrocarbons (HC) and nitrogen oxides (NOₓ) from car exhaust gases, and an oxygen storage component (OSC) is incorporated in such systems to extend the range of conditions of effective operation of the catalyst. The gases of a car exhaust vary from being "rich" (i.e. reducing conditions) to "lean" (i.e. oxidising conditions). Under rich conditions the oxygen required to oxidise the CO and HC components is provided by the OSC. When the system changes to lean conditions the OSC is oxidised by the gases so that it can again provide oxygen when rich conditions are encountered.

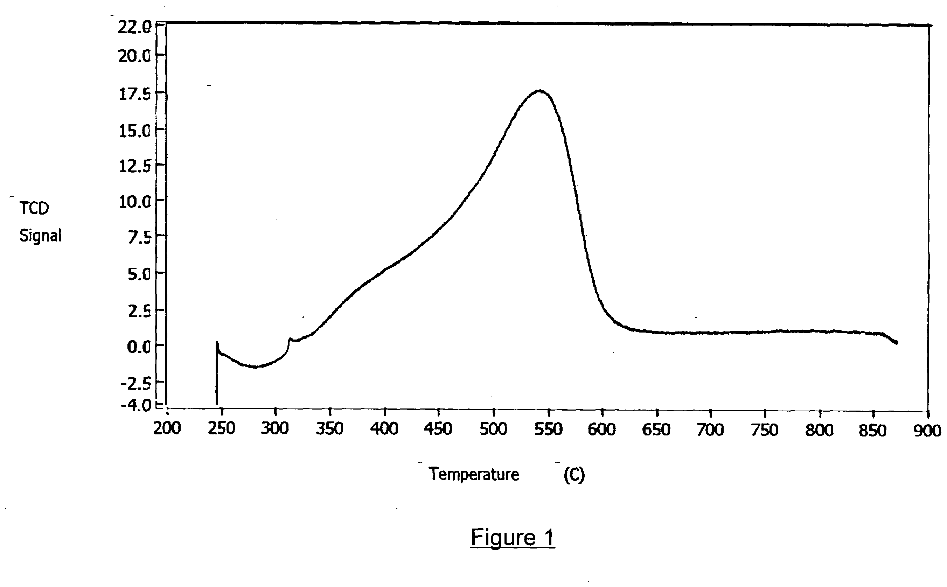

OSCs generally contain ceria and are commonly formed from a solid solution of ceria and zirconia with at least one other component, the ceria content being between 10% and 60% by weight. The OSC's performance under these oxidation and reduction conditions are often measured by Temperature Programmed Reduction (TPR) whereby a sample of OSC material is heated at a constant rate in a stream of reducing gas, such as hydrogen, and the amount of reaction effected by the sample monitored as a function of the gas stream composition. A typical result is shown in accompanying Figure 1 in which the TCD signal is a measure of the electrical current passing through the Thermal Conductivity Detector held in the gas stream. A high TCD value correlates with a high rate of consumption of hydrogen and thus a high rate of oxidation of the gas stream by the OSC. The main features of this TPR measurement are the temperature reached at the peak maximum of the reaction (Tₘₐₓ) and the area under the trace, which is proportional to the amount of the OSC that is reduced. There are other ways of measuring OSC performance, but we have found that when using TPR the typical value of Tₘₐₓ for conventional OSCs is about 450-600°C. The exact value of Tₘₐₓ for a given OSC is dependent on the exact composition of the OSC and the particular protocol of TPR used.

EP 0 310 398A describes the preparation of a ceria-containing material where nitric acid is used for pH adjustment. WO 02/072256A describes the preparation of a ceria-containing material where hydrogen peroxide is added before calcination.

Temperatures of the order of 450° ⁻ 600°C are reached by the OSC during the normal operation of the exhaust catalyst, during which the OSC performs its required function of coping with changes in the exhaust gas composition from rich to lean and back again. However when a car engine is started from cold it takes some time for the catalyst to reach its normal operating temperature, and during this time the exhaust gases are not fully reacted by the catalyst before being discharged to the atmosphere. Recent legislation at least in the UK has changed the protocols for the testing of car emissions to include cold start conditions. As a result a number of ways to prevent the discharge of these partially unreacted emissions have been investigated. One option is to position the catalyst very near to the engine so that it heats up quickly. Another is electrically to heat the catalyst, whilst a third is to try to lower the light-off temperature of the catalyst. The light-off temperature is the temperature at which 50% of the incoming gases are converted to the more acceptable products. This can be achieved by altering the support and the dispersion of the PGM's (platinum group metals), which are generally the active catalysts. However this temperature is different for the three main pollutants being treated, and so it is difficult to find a good compromise combination of support and catalyst. An alternative approach is to try to reduce the Tₘₐₓ of the OSC since this would also be useful in meeting the cold start regulations.

As part of our investigations into why the Tₘₐₓ of an OSC varies with its composition we examined the effect of modifying its surface. An example of such modification of a ceria-zirconia OSC is described in JP-A-2000281343 where chemical vapour-phase transportation of the surface material after the reaction with a halide is used. Surprisingly it has been found that such a sophisticated surface attack is not necessary and that a relatively simple chemical treatment of the surface can result in a significant lowering of Tₘₐₓ. In some cases a Tₘₐₓ of as low as 250°C can be obtained which is substantially lower than any values of Tₘₐₓ which have previously been reported for a ceria-zirconia OSC.

The present invention provides a method of treating a ceria-zirconia mixed oxide composed of 90-10% by weight of zirconia (ZrO₂) and 10-60% by weight of ceria (CeO₂) in order to improve its performance as an oxygen storage component of an exhaust gas purification system, which method comprises modifying at least some of the surface of the material by contact with an aqueous solution of hydrogen peroxide, wherein the mole ratio of hydrogen peroxide to ceria-zirconia mixed oxide is about 3:1, and the concentration of the aqueous solution and the length of time of its contact are such that temperature reached at the peak maximum of the reaction as measured by temperature programmed reduction, known as Tₘₐₓ, of the treated material is lower than the Tₘₐₓ of equivalent untreated material by at least 50°C.

The ceria- zirconia mixed oxide is optionally doped with up to 50% by weight of a third component comprising the oxide of one or more of the rare earth metals, especially Pr, La, Nd and Y, alkaline earth metals consisting of Mg, Ca and Ba, and Al and Si. The material can be treated in accordance with the present invention either before or after admixture with the exhaust catalyst material, either before or after calcination, and either before or after incorporation into the exhaust system of an automobile, since the active sites of the material which enable it to operate as an OSC appear to be distinct from its other structural and chemical characteristics. In particular the treatment of the present invention can be carried out to the wash coat which contains the ceria-containing material and optionally alumina which is applied to the monolith forming the structure of a catalytic converter.

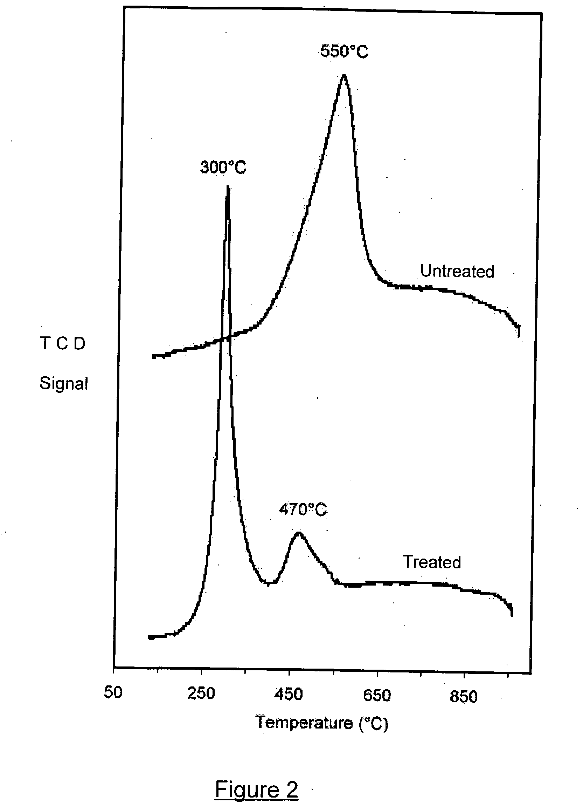

An investigation into this chemical treatment has shown that the conditions of treatment of the material and the nature of the treating reagent are important, as known ceria etching reagents such as sulphuric acid have been found to have no beneficial effect on its Tₘₐₓ. Potentially suitable treatment agents such as hydrochloric acid are undesirable because of the contamination they leave on its surface after the material has been calcined. Surprisingly and for reasons at present unknown it has been found that only hydrogen peroxide and nitric acid (nitric acid not being part of the invention) are effective in achieving a significant lowering of the Tₘₐₓ of ceria-containing material suitable for use as an OSC. The conditions that have been found to be important are the temperature and
time of treatment, and the concentration of the treatment agent. The treatment should be such as to modify at least some of the surface of the material to an extent sufficient to cause a significant lowering of the Tₘₐₓ temperature of the material, e.g. at least 50°C. A comparison between untreated and treated material is shown in accompanying Figure 2.

It has been found that the surface modification effected by the method of the present invention is not of the nature of an etching treatment since it was found that there was effectively no loss of surface material by dissolution and there was no change in the overall chemical composition of the material. An examination of the differences between the untreated and treated materials with normal and lower values of Tₘₐₓ has shown that the treated materials often possess some anisotropy in their crystallite sizes. X-ray line broadening can be used to measure crystallite size. The precise size measured has been found to depend up on the peak chosen and hence the crystallographic direction of the measurement. All treated samples which show the enhanced TPR also show at least some anisotropy in their crystallite size measurements (D_{<002>}/D_{<200>} ∼0.8), although the extent of anisotropy has been found to be dependent on the way in which the OSC was prepared.

With both nitric acid and hydrogen peroxide it has been found that the time required to treat the surface of the material sufficiently is dependent upon the concentration of the aqueous solution used, viz. the stronger the solution the shorter the treatment time needed. There must also be sufficient of the treatment solution since there appears to be a direct interaction between individual molecules of the treatment agent and the active sites on the surface of the material. For example, when the material is first contacted by a solution of hydrogen peroxide there is evolution of oxygen which ceases after about one hour at room temperature. Prolonged immersion of the material in the solution after the cessation of oxygen evolution does not lead to any further lowering of Tₘₐₓ indicating that the modification of the surface only takes place during the decomposition of the hydrogen peroxide to water.

Furthermore, it has been found that the purity of the treatment solution is important. For some commercially available hydrogen peroxide solutions the additives present, such as stabilisers, have been found adversely to affect the performance of those solutions as treatment agents in accordance with the present invention. Paradoxically it has been found that some higher purity commercial hydrogen peroxide solutions perform less well than lower grade solutions, possibly because the stabilisers used to try to maintain the solution's high purity are detrimental to the mechanism by which that solution modifies the surface of ceria-containing material. Similar difficulties can be encountered with different grades of nitric acid.

Since the theoretical maximum concentration of hydrogen peroxide solution is about 35% by volume, the preferred commercially available solutions of highest strength of about 30% are preferably used.

The present invention also provides a novel material containing ceria whose surface has been modified by chemical treatment whereby the material possesses a Tₘₐₓ of less than 500°C, preferably less than 400°C and more preferably less than 300°C, optionally with at least some anisotropy in its crystallite size.

The present invention will now be exemplified by the following Examples which refer to the accompanying drawings, in which the TCD signal axis is graduated in arbitrary units or is left ungraduated since it is the shape of the TCD temperature profile which is significant.

### Example 1 (not of the invention)

A zirconia-based mixed oxide containing ceria was prepared with the composition: 72% by weight ZrO₂, 20% by weight CeO₂, 4% by weight La₂O₃ and 4% by weight NdO₂. 1g of the doped mixed oxide was surface treated with nitric acid by immersing it in 30ml of an aqueous solution of 20% nitric acid at 35°C and leaving it to stand for one hour. The nitric acid used was a concentrated commercial grade manufactured by C. Erba under the grade identification "RPE" diluted to 20% by weight. The treated solid was then filtered off, dried at 120°C for two hours and then calcined at 500°C for five hours.

For comparison a sample of the same mixed oxide was prepared without surface treatment, i.e. the solution only contained water, and was dried and calcined under the same conditions. Samples of both treated and untreated material were subjected to TPR under the same regime and their respective values of Tₘₐₓ were determined. The Tₘₐₓ of the treated material was found to be significantly lower than that of the un-treated material, viz. 300°C vs. 550°C, as shown in accompanying Figure 2.

### Example 2

A series of experiments was carried out to examine the effect of the concentration of hydrogen peroxide in the treatment solution on the Tₘₐₓ of a zirconia-based oxide containing ceria.

The mixed oxide was prepared with the composition: 77% by weight ZrO₂, 15% by weight CeO₂, 5% by weight La₂0₃ and 3% by weight Nd₂O₃. For each experiment 2 grams of a sample of this mixed oxide, which is approximately 0.015 molar, were used and a suspension of the sample was prepared by the addition of a mixture of 75ml of water and 10ml of 10% ammonia. This suspension had a pH of 11.6 and was held at 25°C and vigorously stirred. For each experiment a separate aqueous solution was prepared and added to the stirred sample suspension at a rate of 0.05 ml/min. The mixture was allowed to react for 20 hours and then filtered and washed with 10ml of water. The filtrate was then dried at 120°C for two hours and then calcined at 700°C for five hours using a ramp of 3°C/min up to the calcination temperature and a cooling ramp of 4.5°C/min back to room temperature.

The compositions of the various treatment solutions are set out in Table 1 and the conditions of treatment are set out in Table 2. It will be noted that the treatment solution of the first sample contained no hydrogen peroxide and is therefore a Comparative Sample. The other samples all used as the source of hydrogen peroxide the commercially available reagent sold by the company Sigma Aldrich under the name "Fluka - Hydrogen Peroxide Purum - grade 95302". This reagent has a concentration of 30% by volume H₂0₂.

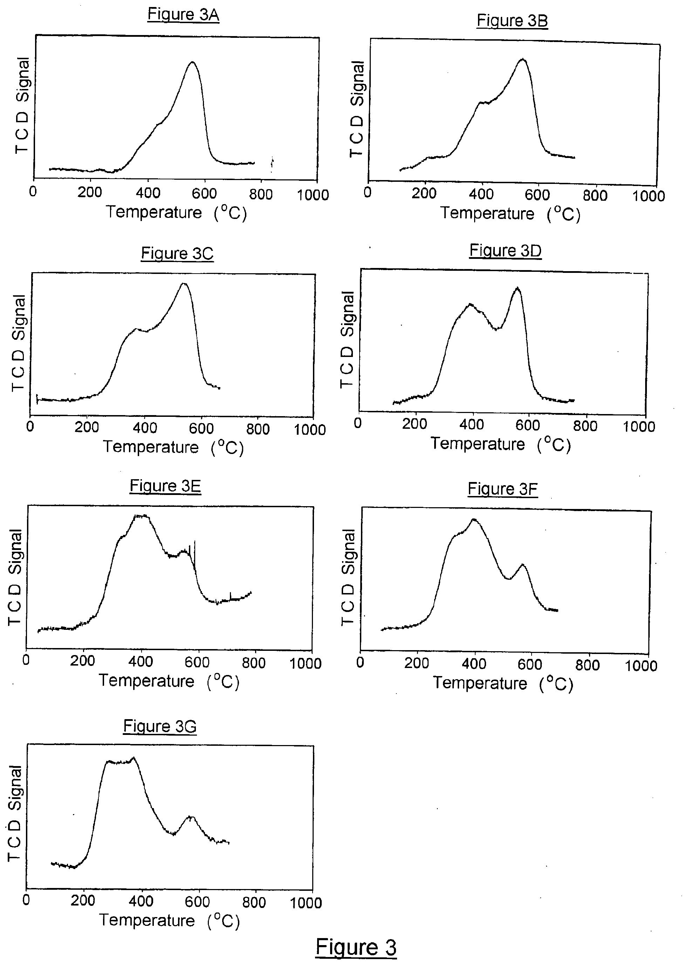

The TCD signal measurements for the seven samples are shown in the seven accompanying corresponding Figures 3A to 3G, from which it will be noted that the values of Tₘₐₓ were lowered successively from about 550°C to about 250°C by means of the increasing strength of the hydrogen peroxide treatment solution.

### Example 3

A similar set of experiments was carried out to examine the effect of different addition rates of the treatment solution to the sample suspension at two different H₂0₂ concentrations. The compositions of the treatment solutions tested are set out in Table 3 and the treatment conditions for the samples are set out in Table 4.

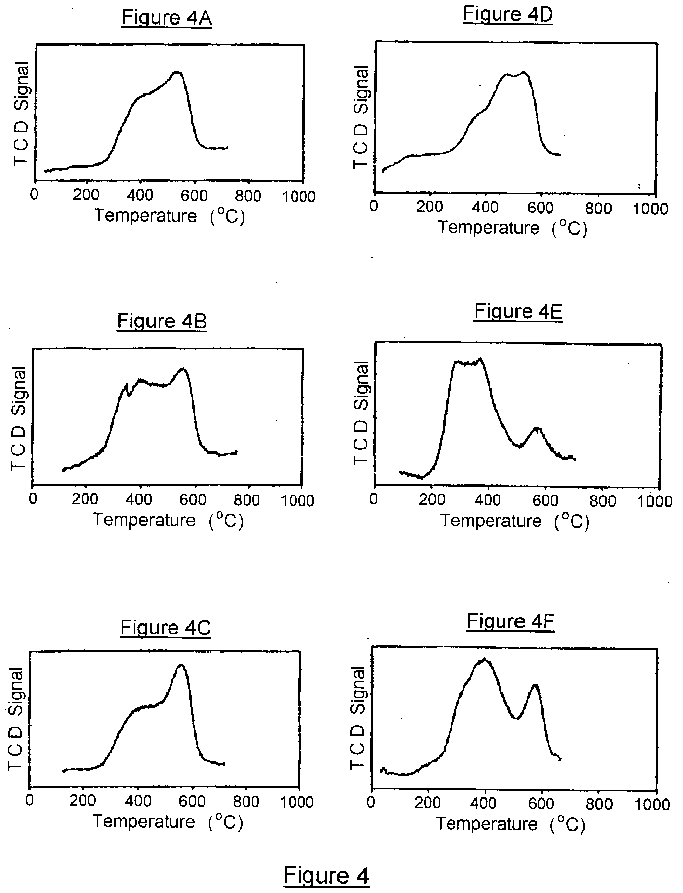

The Tₘₐₓ values for the treated samples are set out in accompanying six corresponding Figures 4A to 4F, from which it will be noted that too fast an addition rate should be avoided for achieving an optimum lowering of Tₘₐₓ. For Samples 7 to 9 the addition of 4% H₂0₂ is equivalent to a H₂0₂/mixed oxide molar ratio of 2.8:1.

For all measurement of Tₘₐₓ the following standard protocol was adopted:
The sample was prepared for its TCD measurement by being heated in a 20% by volume oxygen/80% by volume helium gas mixture at 500°C. The temperature was ramped at 10°C/min up to 500°C, held at that temperature for 30 minutes, and then cooled down to 150°C. The surrounding gas mixture was then changed to a mixture of 5% by volume hydrogen/95% by volume argon, and the sample heated to 900°C. The temperature was ramped from 150° at 10°C/min up to 900°C, held at that temperature for 30 minutes, and then cooled to ambient temperature.

### Example 4

An experiment was carried out to assess the effect of the surface treatment by hydrogen peroxide of ceria in the presence of alumina, thereby simulating the treatment of a wash coat of the type applied to the monolith forming the structure of a catalytic converter for an automobile exhaust system.

Two grams of alumina were slurried with ten grams of the mixed oxide of Example 1 with an amount of water to obtain a loading of approximately 50% by weight of the mixed oxide on alumina in 100 ml of water. A solution of 0.5% by volume ammonia was added to the slurry to precipitate the mixed oxide on the alumina, and the final pH of the slurry was 8.0 to 8.5. After slurrying for a further one hour the solid formed was filtered and dried at 120°C for two hours. It was then calcined as for the samples of Example 2.

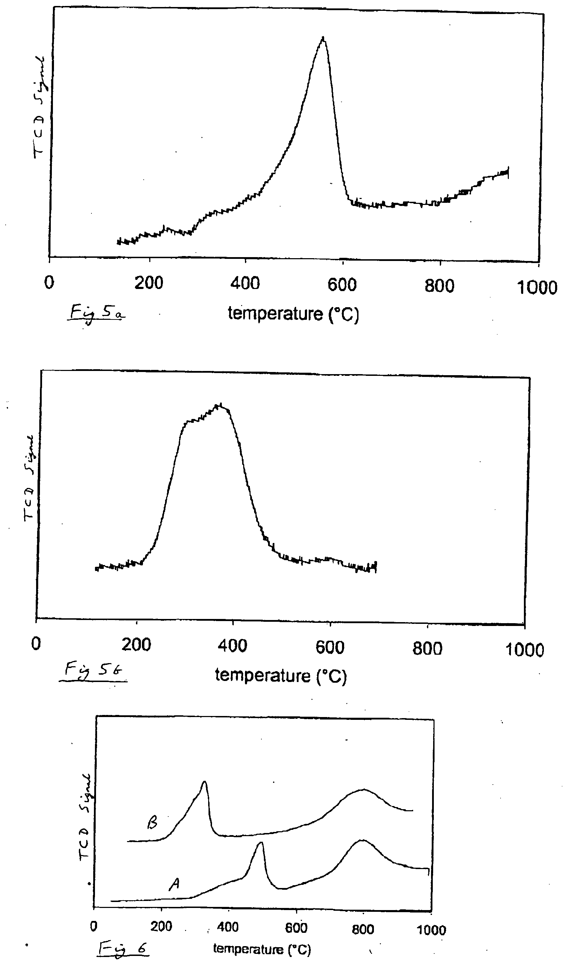

This untreated sample was subjected to TPR under the standard protocol and the results are shown in accompanying Figure 5a. It will be noted that the Tₘₐₓ of this sample is about 550°C.

For comparison a similar sample was prepared but this time treated in accordance with the present invention with 30% hydrogen peroxide in the same manner as for Sample 10 of Example 3, and again a TPR measurement under the same protocol was carried out. The results are set out in Figure 5b showing the lowering of Tₘₐₓ to about 300°C.

### Example 5

An experiment was carried out to examine the surface treatment by hydrogen peroxide on ceria on its own.

A sample of ceria having a BET surface area of 100m²/g was formed into a suspension with vigorous stirring by the addition of two grams of ceria to 10 ml of 10% by volume ammonia. The suspension was held at 25°C and had a pH of 11.7. 80ml of a solution of 30% by volume hydrogen peroxide of the commercial grade used in Example 2 was added at a rate of 0.25ml/min. The reaction was allowed to continue for 20 hours before filtering. The filtrate was washed, dried and calcined as for the samples of Example 2 and the standard TPR protocol carried out.

For comparison an identical sample of ceria was prepared and treated with a solution, except that the solution only contained water and not hydrogen peroxide.

The TPR results for the treated and untreated ceria samples are shown in accompanying Figure 6, in which trace A refers to the untreated sample and trace B refers to the treated sample. Again the lowering of the Tₘₐₓ peak (left hand peak) is evident.

**TABLE 1**

| | Treatment Solution | | |
|---|---|---|---|
| Sample No. | Vol H₂0 (ml) | Vol H₂0₂ (ml) | pH |
| Comparative | 33.0 | 0.0 | 7.0 |
| 1 | 31.9 | 1.1 | 4.0 |
| 2 | 30.8 | 2.2 | 3.7 |
| 3 | 28.6 | 4.4 | 3.2 |
| 4 | 24.2 | 8.8 | 3.2 |
| 5 | 15.4 | 17.6 | 2.9 |
| 6 | 0.0 | 33.0 | 2.6 |

**TABLE 2**

| Sample No. | % by Vol H₂0₂ | pH of Solution (start) | pH of Solution (end) | Solution addition rate (ml/min) |
|---|---|---|---|---|
| Comparative | 0 | 11.5 | 11.2 | 0.047 |
| 1 | 1 | 11.6 | 11.0 | 0.050 |
| 2 | 2 | 11.6 | 10.9 | 0.050 |
| 3 | 4 | 11.4 | 10.9 | 0.050 |
| 4 | 8 | 11.6 | 10.9 | 0.049 |
| 5 | 19 | 11.4 | 10.9 | 0.049 |
| 6 | 30 | 11.2 | 10.9 | 0.049 |

**TABLE 3**

| | Treatment Solution | | |
|---|---|---|---|
| Sample No. | Vol H₂0 (ml) | Vol H₂0₂ (ml) | pH |
| 7 | 28.6 | 4.4 | 3.6 |
| 8 | 28.6 | 4.4 | 3.2 |
| 9 | 28.6 | 4.4 | 3.6 |
| 10 | 0.0 | 33.0 | 2.1 |
| 11 | 0.0 | 33.0 | 2.6 |
| 12 | 0.0 | 33.0 | 2.0 |

**TABLE 4**

| Sample No. | % by Vol H₂0₂ | pH of Solution (start) | pH of Solution (end) | Solution addition rate (ml/min) |
|---|---|---|---|---|
| 7 | 4 | 11.7 | 11.2 | 0.199 |
| 8 | 4 | 11.4 | 10.9 | 0.050 |
| 9 | 4 | 11.5 | 10.8 | 0.024 |
| 10 | 30 | 11.5 | 11.1 | 0.200 |
| 11 | 30 | 11.2 | 10.9 | 0.049 |
| 12 | 30 | 11.3 | 10.6 | 0.025 |

## Claims

1. A method of treating a ceria-zirconia mixed oxide composed of 90-10% by weight of zirconia (ZrO₂) and 10-60% by weight of ceria (CeO₂) in order to improve its performance as an oxygen storage component of an exhaust gas purification system, which method comprises modifying at least some of the surface of the material by contact with an aqueous solution of hydrogen peroxide, wherein the mole ratio of hydrogen peroxide to ceria-zirconia mixed oxide is 3:1, and the concentration of the aqueous solution and the length of time of its contact are such that temperature reached at the peak maximum of the reaction as measured by temperature programmed reduction, known as Tₘₐₓ, of the treated material is lower than the Tₘₐₓ of equivalent untreated material by at least 50°C, as measured using the standard protocol described in example 3 of the description.

2. A method as claimed in claim 1 wherein the ceria-containing material is doped with up to 50% by weight of a third component comprising the oxide of one or more of the rare earth metals, especially Pr, La, Nd and Y, alkaline earth metals consisting of Mg, Ca and Ba, and Al and Si.

3. Ceria-containing material when treated by a method as claimed in any one of the preceding claims having a Tₘₐₓ of less than 500°C.

4. Ceria-containing material as claimed in claim 3 having a Tₘₐₓ of less than 400°C.

5. Ceria-containing material as claimed in claim 4 having a Tₘₐₓ of less than 300°C.

6. Ceria-containing material as claimed in any one of claims 3 to 5 having at least some anisotropy in its crystallite size.

7. An oxygen storage component comprising a ceria-containing material as claimed in any one of claims 3 to 6.

8. A wash coat containing a ceria containing material as claimed in any one of claims 3 to 6, optionally with alumina, suitable for application to the monolith forming the structure of a catalytic converter of an automobile exhaust system.

9. An automobile exhaust system incorporating an oxygen storage component as claimed in claim 7.

## Patentansprüche

1. Ein Verfahren zur Behandlung eines Ceroxid-Zirkonoxid-Mischoxids, das aus 90-10 Gew.-% Zirkonoxid (ZrO₂) und 10-60 Gew.-% Ceroxid (CeO₂) zusammengesetzt ist, um seine Leistung als Sauerstoffspeicherkomponente eines Abgasreinigungssystems zu verbessern, wobei das Verfahren das Modifizieren mindestens eines Teils der Oberfläche des Materials durch Kontakt mit einer wässrigen Lösung von Wasserstoffperoxid beinhaltet, wobei das Molverhältnis von Wasserstoffperoxid zu Ceroxid-Zirkonoxid-Mischoxid 3 : 1 beträgt und die Konzentration der wässrigen Lösung und die Länge der Kontaktzeit derart sind, dass die Temperatur des behandelten Materials, die bei dem Peakmaximum der Reaktion erreicht wird, als Tₘₐₓ bekannt, wie gemessen durch temperaturprogrammierte Reduktion, um mindestens 50 °C niedriger als die Tₘₐₓ von äquivalentem unbehandeltem Material ist, wie gemessen unter Verwendung des in Beispiel 3 der Beschreibung beschriebenen Standardprotokolls.

2. Verfahren gemäß Anspruch 1, wobei das ceroxidhaltige Material zu bis zu 50 Gew.-% mit einer dritten Komponente dotiert ist, beinhaltend das Oxid eines oder mehrerer von den Seltenerdmetallen, insbesondere Pr, La, Nd und Y, Erdalkalimetallen, bestehend aus Mg, Ca und Ba, sowie AI und Si.

3. Ceriumdioxidhaltiges Material, wenn es mittels eines Verfahrens gemäß einem der vorhergehenden Ansprüche behandelt wurde, das eine Tₘₐₓ von weniger als 500 °C aufweist.

4. Ceriumdioxidhaltiges Material gemäß Anspruch 3, das eine Tₘₐₓ von weniger als 400 °C aufweist.

5. Ceriumdioxidhaltiges Material gemäß Anspruch 4, das eine Tₘₐₓ von weniger als 300 °C aufweist.

6. Ceriumdioxidhaltiges Material gemäß einem der Ansprüche 3 bis 5, das mindestens eine gewisse Anisotropie in seiner Kristallitgröße aufweist.

7. Eine Sauerstoffspeicherkomponente, die ein ceroxidhaltiges Material gemäß einem der Ansprüche 3 bis 6 beinhaltet.

8. Ein Washcoat, der ein ceroxidhaltiges Material gemäß einem der Ansprüche 3 bis 6, optional mit Aluminiumoxid, geeignet zur Anwendung auf dem Monolithen, der die Struktur eines katalytischen Konverters eines Automobilabgassystems bildet, beinhaltet.

9. Ein Automobilabgassystem, das eine Sauerstoffspeicherkomponente gemäß Anspruch 7 inkorporiert.

## Revendications

1. Une méthode de traitement d'un oxyde mixte d'oxyde de cérium-oxyde de zirconium composé de 90 à 10 % en poids d'oxyde de zirconium (ZrO₂) et de 10 à 60 % en poids d'oxyde de cérium (CeO₂) afin d'améliorer sa performance en tant que constituant de stockage d'oxygène d'un système de purification des gaz d'échappement, laquelle méthode comprend la modification d'au moins une partie de la surface du matériau grâce à la mise en contact avec une solution aqueuse de peroxyde d'hydrogène, dans laquelle le rapport molaire du peroxyde d'hydrogène à l'oxyde mixte d'oxyde de cérium-oxyde de zirconium est de 3/1, et la concentration de la solution aqueuse et la durée de sa mise en contact sont telles que la température atteinte au maximum du pic de la réaction telle que mesurée par réduction en température programmée, connue sous le nom de Tₘₐₓ, du matériau traité soit inférieure à la Tₘₐₓ du matériau équivalent non traité d'au moins 50 °C, telle que mesurée à l'aide du protocole standard décrit dans l'exemple 3 de la description.

2. Une méthode telle que revendiquée dans la revendication 1 dans laquelle le matériau contenant de l'oxyde de cérium est dopé avec jusqu'à 50 % en poids d'un troisième constituant comprenant l'oxyde d'un ou de plusieurs métaux parmi les métaux des terres rares, en particulier Pr, La, Nd et Y, des métaux alcalino-terreux consistant en Mg, Ca et Ba, et Al et Si.

3. Un matériau contenant de l'oxyde de cérium quand il est traité selon une méthode telle que revendiquée dans n'importe laquelle des revendications précédentes ayant une Tₘₐₓ de moins de 500 °C.

4. Un matériau contenant de l'oxyde de cérium tel que revendiqué dans la revendication 3 ayant une Tₘₐₓ de moins de 400 °C.

5. Un matériau contenant de l'oxyde de cérium tel que revendiqué dans la revendication 4 ayant une Tₘₐₓ de moins de 300 °C.

6. Un matériau contenant de l'oxyde de cérium tel que revendiqué dans n'importe laquelle des revendications 3 à 5 ayant au moins une certaine anisotropie dans sa taille de cristallite.

7. Un constituant de stockage d'oxygène comprenant un matériau contenant de l'oxyde de cérium tel que revendiqué dans n'importe laquelle des revendications 3 à 6.

8. Un revêtement verso contenant un matériau contenant de l'oxyde de cérium tel que revendiqué dans n'importe laquelle des revendications 3 à 6, facultativement avec de l'oxyde d'aluminium, qui convient pour une application sur le monolithe formant la structure d'un convertisseur catalytique d'un système d'échappement automobile.

9. Un système d'échappement automobile incorporant un constituant de stockage d'oxygène tel que revendiqué dans la revendication 7.
